# FASCICULE DE BREVET EUROPEEN

(11) **EP 0 627 333 B1**
(45) Date de publication et mention de la délivrance du brevet: **27.12.1996**
(21) Numéro de dépôt: 94401190.7
(22) Date de dépôt: 30.05.1994
(51) Int. Cl.: B60J 10/00

(54) **Joint de porte pour véhicule automobile**
Türdichtung für Motorfahrzeug
Door seal for motor vehicle

(30) Priorité: 04.06.1993 FR 9306728
(43) Date de publication de la demande: 07.12.1994
(73) Titulaire: Société Anonyme dite: MESNEL, 92000 Nanterre (FR)
(72) Inventeur: Le Marrec, Robert, F-95870 Bezons (FR)
(74) Mandataire: Jolly, Jean-Pierre

(56) Documents cités:
- FR-A- 2 607 216
- FR-A- 2 661 941
- GB-A- 2 067 637
- GB-A- 2 106 971

## Description

La présente invention concerne un joint de porte pour véhicule automobile du type exposé dans GB-A-2 067 637 et GB-A-2 106 971.

On sait que de tels joints de porte comprennent habituellement un élément de fixation, apte à être rendu solidaire d'une partie saillante de l'encadrement de porte, et une partie tubulaire ou "bourrelet", attenante à cet élément et apte à se déformer élastiquement lorsqu'elle est comprimée entre l'encadrement et la porte associée. L'élément de fixation a habituellement une section en U et comporte une armature métallique gainée par exemple de polychlorure de vinyle. Il vient coiffer un rebord saillant de la carrosserie et, pour éviter son désengagement accidentel de son support, les faces du U tournées vers ce support comportent généralement des lèvres dirigées vers ce support et facilitant l'accrochage sur celui-ci de cette partie du joint de porte. Le bourrelet est habituellement en caoutchouc cellulaire ou similaire et, comprimé entre l'encadrement de porte et la porte associée, il assure l'étanchéité à ce niveau. Voir GB-A-2 067 637.

Il est cependant souvent souhaitable de renforcer cette étanchéité et, dans ce but, il a été proposé d'utiliser deux parties tubulaires attenantes entre elles, qui sont simultanément déformées lorsque la porte est fermée. Ce système connu présente toutefois l'inconvénient de nécessiter un effort considérablement accru pour fermer la porte.

La présente invention vise à remédier à cet inconvénient en proposant un joint de porte comportant deux éléments tubulaires destinés à être pincés entre un encadrement de porte et la porte associée, qui n'oppose qu'une faible résistance à la fermeture de la porte.

L'invention a également pour but de proposer un joint d'étanchéité de ce type, qui assure une meilleure étanchéité que les joints à deux éléments tubulaires de la technique antérieure.

A cet effet, l'invention a pour objet un joint pour porte d'automobile, comprenant un élément de fixation sur une partie saillante de l'encadrement de cette porte et des éléments tubulaires en un matériau déformable élastiquement, les éléments tubulaires étant destinés à être interposés entre l'encadrement de porte et la porte associée, en position de fermeture de celle-ci, pour assurer l'étanchéité de l'ensemble, ce joint de porte étant caractérisé en ce qu'il comprend deux éléments tubulaires, dont le premier est attenant au second élément tubulaire et à l'élément de fixation, en ce que lesdits éléments tubulaires communiquent entre eux par au moins un orifice ou par un passage continu, de manière que la compression du premier élément tubulaire entre la porte et l'encadrement de porte se traduise par sa déformation et par un gonflement du second élément tubulaire entre cette même porte et l'encadrement de porte, et en ce que le premier élément tubulaire est disposé de manière à être comprimé par la tranche de la porte, tandis que le second élément tubulaire est disposé de manière à être interposé entre la face interne de la porte et l'encadrement de porte.

L'élément tubulaire destiné à être déformé est par conséquent, disposé entre la tranche de la porte et la partie correspondante de l'encadrement de porte, tandis que le second élément tubulaire, communiquant par au moins un orifice ou par une fente continue avec le précédent, est interposé entre la face latérale interne de la porte et l'encadrement de porte, ce second élément ayant des dimensions telles qu'il ne soit comprimé entre la porte et l'encadrement de porte que lorsqu'il se dilate sous la pression de l'air expulsé de l'autre élément tubulaire.

Autrement dit, lorsque le premier élément tubulaire est comprimé entre la tranche de la porte et la partie correspondante de l'encadrement de porte, il se déforme et une partie de l'air qu'il contient est chassée de cet élément tubulaire et transférée dans le second élément tubulaire, à travers le ou les orifices de communication des deux éléments, ou par le passage continu formé entre les deux éléments, pour dilater ce second élément et l'appliquer ainsi fermement contre la porte et contre l'encadrement, en assurant ainsi une seconde étanchéité à son niveau.

Un seul des deux éléments tubulaires sera donc sollicité directement par la porte, lors de la fermeture de celle-ci et le joint conforme à l'invention n'opposera pas une résistance à la fermeture supérieure à celle des joints à bourrelet unique de la technique antérieure. En revanche, du fait du gonflement du second élément tubulaire, en position de fermeture de la porte, le joint conforme à l'invention assurera une étanchéité renforcée, puisqu'elle se manifestera au niveau de chacun des deux éléments tubulaires.

Il en résultera une amélioration marquée de l'insonorisation de la voiture, du fait des deux barrières au passage du bruit ainsi créées, et une meilleure étanchéité à l'eau.

Une forme de mise en oeuvre de l'invention est représentée schématiquement sur les dessins annexés, donnés à titre d'exemple non limitatif. Sur ces dessins :
La figure 1 est une coupe transversale illustrant la forme et la position du joint sur l'encadrement de porte, lorsque la porte est ouverte ;
La figure 2 est une vue analogue représentant le joint déformé par compression, lorsque la porte est fermée.

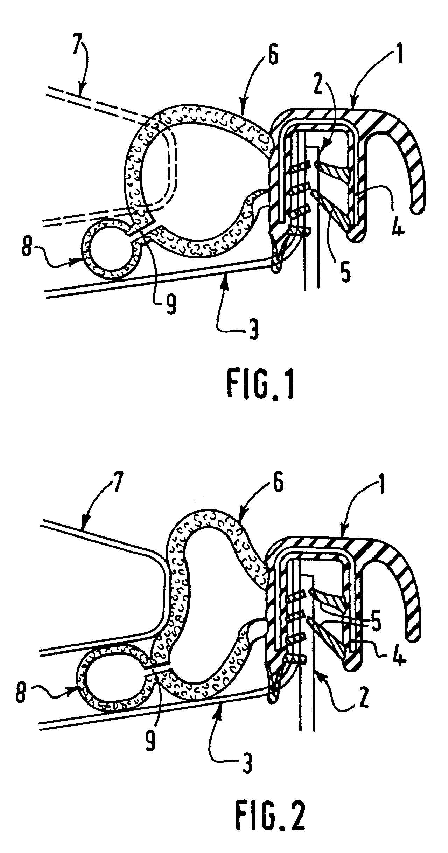

Sur la figure 1, où la porte est représentée en traits interrompus dans sa position fermée, on voit que le joint conforme à l'invention comprend un élément 1 de fixation à section en U, qui coiffe un rebord saillant 2 de l'encadrement de porte 3.

Cet élément 1 comporte de façon connue une armature métallique 4, gainée par exemple de polychlorure de vinyle, et des lèvres 5, faisant saillie en direction du rebord 2, qui assurent le maintien en position de l'élément 1 sur ce rebord.

A l'élément de fixation 1 est attenant un élément tubulaire 6, destiné, en position de fermeture de la porte 7, à être comprimé entre la tranche de celle-ci et la partie disposée en regard de l'encadrement de porte. A cet élément 6 est attenant un second élément tubulaire 8, de plus petites dimensions, qui communique par des orifices 9 avec l'élément 6. Les éléments 6 et 8 sont en un matériau élastiquement déformable, par exemple en caoutchouc cellulaire.

L'élément 8 a des dimensions telles que, normalement, comme on le voit sur la figure 1, il n'est pas directement comprimé par la porte 7, lorsqu'on la referme, et qu'il n'oppose donc pas de résistance à la fermeture. En revanche, comme représenté sur la figure 2, l'élément 6, lui, est fortement sollicité par la tranche de la porte 7, lorsque l'on ferme celle-ci. Il est alors déformé par compression et l'air qu'il contient pénètre sous pression par les orifices 9 dans l'élément 8. Cet élément 8 se dilate donc et vient alors s'appliquer fermement contre la face interne de la porte et l'encadrement de porte.

L'étanchéité primaire du joint est donc assurée par l'élément tubulaire 6, mais l'élément 8 renforce considérablement aussi bien l'étanchéité à l'eau que l'isolation phonique du véhicule.

A la place de ou des orifices 9, il est possible, naturellement, d'utiliser un passage continu, formé par exemple par une fente ménagée dans la cloison séparant les éléments tubulaires 6 et 8.

Les éléments 1, 6 et 8 du joint conforme à l'invention peuvent être réalisés en une seule phase par co-extrusion. Les éléments 6 et 8 peuvent aussi être réalisés indépendamment, l'élément 6 comportant alors une semelle permettant de la coller ensuite sur une branche du U de l'élément 1.

La communication entre les éléments tubulaires 6 et 8 peut être réalisée de diverses manières à la portée de l'homme de l'art. Dans un mode de réalisation préféré, les éléments 6 et 8, réalisés par coextrusion, sont séparés par une paroi commune de très faible épaisseur (1 mm ou moins), qui peut être découpée en continu après extrusion. En variante, on peut aussi gonfler l'ensemble des éléments 6 et 8 ainsi réalisé, de manière à faire éclater la paroi mince qui les sépare.

L'invention apporte donc un système d'une grande efficacité pour renforcer l'étanchéité et l'isolation au bruit des véhicules automobiles.

## Revendications

1. Joint pour porte d'automobile (7), comprenant un élément (1) de fixation sur une partie saillante (2) de l'encadrement (3) de cette porte et des éléments tubulaires (6,8) en un matériau déformable élastiquement, les éléments tubulaires (6,8) étant destinés à être interposés entre l'encadrement de porte (3) et la porte associée (7), en position de fermeture de celle-ci, pour assurer l'étanchéité de l'ensemble, ce joint de porte étant caractérisé en ce qu'il comprend deux éléments tubulaires (6,8), dont le premier (6) est attenant au second élément tubulaire (8) et à l'élément de fixation (1), en ce que lesdits éléments tubulaires (6,8) communiquent entre eux par au moins un orifice (9) ou par un passage continu, de manière que la compression du premier élément tubulaire (6) entre la porte et l'encadrement de porte se traduise par sa déformation et par un gonflement du second élément tubulaire (8) entre cette même porte et l'encadrement de porte, et en ce que le premier élément tubulaire (6) est disposé de manière à être comprimé par la tranche de la porte (7), tandis que le second élément tubulaire (8) est disposé de manière à être interposé entre la face interne de la porte (7) et l'encadrement de porte (3).

2. Joint selon la revendication 1, caractérisé en ce que le second élément tubulaire (8) a des dimensions telles qu'il n'est pas directement sollicité par la porte (7), lorsque l'on referme celle-ci, et qu'il ne vient en contact avec cette porte (7) que lorsqu'il se dilate sous la pression de l'air expulsé du premier élément tubulaire (6), lorsque celui-ci est comprimé.

## Claims

1. A seal for a motor vehicle door (7) comprising an element (1) for fixing on a projecting part (2) of the frame (3) of said door and tubular elements (6, 8) of an elastically deformable material, the tubular elements (6, 8) being intended to be interposed between the door frame (3) and the associated door (7) in the closure position thereof to ensure sealing of the assembly, the door seal being characterised in that it comprises two tubular elements (6, 8) of which the first is adjoining the second tubular element (8) and the fixing element (1), that said tubular elements (6, 8) communicate with each other by way of at least one orifice (9) or by way of a continuous passage so that compression of the first tubular element (6) between the door and the door frame results in deformation thereof and swelling of the second tubular element (8) between said same door and the door frame, and that the first tubular element (6) is so disposed as to be compressed by the edge of the door (7) while the second tubular element (8) is so disposed as to be interposed between the inside face of the door (7) and the door frame (3).

2. A seal according to claim 1 characterised in that the second tubular element (8) is of dimensions such that it is not directly acted upon by the door (1) when the door is closed and it comes into contact with said door (7) only when it expands under the pressure of the air expelled from the first tubular element (6) when the latter is compressed.

## Patentansprüche

1. Abdichtung für eine Kraftfahrzeugtür (7), die auf einem vorspringenden Abschnitt (2) des Rahmens (3) dieser Tür ein Befestigungselement (1) und röhrenförmige Elemente (6, 8) aus einem verformbaren elastischen Material aufweist, wobei die röhrenförmigen Elemente (6, 8) dazu bestimmt sind, zwischen dem Türrahmen (3) und der zugehörigen Tür (7) in der Schließposition dieser zu liegen zu kommen, um die Dichtheit der Anordnung sicherzustellen, dadurch gekennzeichnet, daß die Abdichtung zwei röhrenförmige Elemente (6, 8) aufweist, von denen das erste (6) an das zweite röhrenförmige Element (8) und an das Befestigungselement derart angrenzt, daß die besagten röhrenförmigen Elemente (6, 8) miteinander über mindestens eine Öffnung (9) oder über eine durchgehende Durchtrittsausnehmung derart in Verbindung stehen, daß das Zusammendrücken des ersten röhrenförmigen Elements (6) zwischen der Tür und der Türeinfassung sich über seine Verformung und über ein Aufblähen des zweiten röhrenförmigen Elements (8) zwischen dieser gleichen Tür und der Türeinfassung auswirkt, und daß das erste röhrenförmige Element (6) derart angeordnet ist, daß es von dem Abschnitt der Tür (7) zusammengedrückt wird, während das zweite röhrenförmige Element (8) derart angeordnet ist, daß es zwischen der Innenseite der Tür (7) und der Türeinfassung (3) zu liegen kommt.

2. Abdichtung nach Anspruch 1, dadurch gekennzeichnet, daß das zweite röhrenförmige Element (8) Abmessungen derart aufweist, daß es nicht unmittelbar auf die Tür (7) wirkt, wenn man diese schließt, und daß es in Anlage mit der Tür (7) gerät, wenn es sich unter Druck der aus dem ersten röhrenförmigen Element (6) ausgestoßenen Luft ausdehnt, wenn dieses zusammengedrückt wird.
